# EUROPEAN PATENT APPLICATION

(11) **EP 4 797 388 A1**
(43) Date of publication of application: **26.08.2026**
(21) Application number: 25159278.8
(22) Date of filing: 21.02.2025
(51) Int. Cl.: H01M 10/6552, H01M 50/209, H01M 50/249, H01M 50/358

(54) **A STRUCTURAL ELEMENT, A BATTERY HOUSING ASSEMBLY AND A VEHICLE**

(71) Applicant: Volvo Truck Corporation, 405 08 Göteborg (SE)
(72) Inventor: Rout, Dhirendra, 422 54 Göteborg (SE); Irannezhad, Mike, 413 30 Göteborg (SE); Nicklasson, Kristian, 439 55 Åsa (SE)
(74) Representative: Valea AB

(57) **Abstract**

A structural element (7) for an energy storage system battery housing (6) configured to house battery cell stack(s) (4), the structural element (7) having a longitudinal extension along a longitudinal direction (L), a width extension along a width direction (W) and a height extension along a height direction (H). The structural element comprises a venting channel (71) with an extension in the longitudinal direction, which venting channel forms a space configured for transport of cell ejecta from the battery cell stack(s); and at least a first supplemental channel (72) in the longitudinal direction, which supplemental channel(s) forms a space configured for containment of PCM. The supplemental channel(s) is separated from the venting channel with at least a first shared wall (73) configured to at least partly rupture when exposed to a temperature above a temperature threshold and/or a flow of matter at a velocity above a velocity threshold.

## Description

### TECHNICAL FIELD

The disclosure relates generally to energy storage systems. In particular aspects, the disclosure relates to a structural element for an energy storage system battery housing, a battery housing assembly and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electrically powered vehicle may comprise an energy storage system (ESS) for storing electrical energy, which may be used for providing electrical power such as to one or more electric motors, for instance for driving the vehicle. The energy storage system is typically in the form of one or more battery packs or modules - which modules for instance are comprised in one or more packs - comprising a plurality of electrochemical cells, such as lithium-ion battery cells. The cells may for instance be stacked one after the other in one or more rows, which further potentially may be stacked on top of one another. Moreover, the cells may for instance be contained in one or more battery housings which - among other things - may provide structural support, and which battery housings may be part of the modules and/or packs.

A battery cell may in some situations experience a rapid increase of cell temperature due to uncontrolled reactions inside the cell, also known as thermal runaway. In such a scenario, cell ejecta - for instance gas and/or particles - may erupt from the cell. In view thereof, there is known in the art to implement channels for transporting cell ejecta away from the cells - such as to a cell ejecta trapping compartment - and further to embed phase change material (PCM) in battery housings, modules and/or packs, which may be released in the unlikely event of a thermal runaway to - due to the PCM's heat absorption function during the phase change process - mitigate the risk of thermal runaway propagation. Less volume allotted for battery cells, however, may translate into the energy storage system being able to store less electrical energy - a struggle of space which continuously pose a challenge.

There is accordingly a strive to develop improved technology relating to energy storage systems, which saves volume in battery housings, packs and/or modules - thus leaving room for more energy - while at the same time mitigating the risk of thermal runaway propagation.

### SUMMARY

According to a first aspect of the disclosure, there is provided a structural element for an energy storage system battery housing configured to house at least a first battery cell stack, the structural element having a longitudinal extension along a longitudinal direction, a width extension along a width direction and a height extension along a height direction. The structural element comprises a venting channel with an extension in the longitudinal direction, which venting channel forms a space configured for transport of cell ejecta from the at least first battery cell stack. The structural element further comprises at least a first supplemental channel in the longitudinal direction, which at least first supplemental channel forms a space configured for containment of phase change material (PCM). The at least first supplemental channel is separated from the venting channel with at least a first shared wall configured to at least partly rupture when exposed to a temperature above a temperature threshold and/or a flow of matter at a velocity above a velocity threshold.

The first aspect of the disclosure may seek to provide an improved and/or alternative approach of saving volume in a battery housing, pack and/or module while at the same time mitigating the risk of thermal runaway propagation. A technical benefit may include that a transport channel for transporting potential cell ejecta - along with one or more supplemental channels configured to be filled with PCM - are comprised within a structural element for and/or of an ESS battery housing, thus enabling for saving space within the housing, module and/or pack, and potentially further saving cost, while at the same time supporting the ability of drastically reducing the temperature of potential cell ejecta.

That is, since the introduced concept relates to a structural element for an energy storage system battery housing configured to house at least a first battery cell stack, which structural element has a longitudinal extension along a longitudinal direction, a width extension along a width direction and a height extension along a height direction, there is provide a structural member - for instance extending 1-2 meters longitudinally - intended to constitute an element for and/or of an ESS battery housing - for instance comprised in a battery module and/or pack - which structural element may extend in parallel or essentially in parallel to, respectively, an x-, y- and z-axis.

Moreover, that is, since the structural element comprises a venting channel with an extension in - or essentially in - the longitudinal direction, which venting channel forms a space configured for transport of cell ejecta from the at least first battery cell stack, there is provided a longitudinally-stretching elongated void and/or cell ejecta transport channel in the structural element, intended and/or adapted for venting of potential cell ejecta - such as gas and/or particles - from one or more battery cell stacks, for instance to a cell ejecta trapping and/or outlet compartment of - and/or in connection with - the battery housing, module and/or pack and/or to an outside thereof. Thereby, the venting channel is integrated within the structural element in an efficient manner.

Furthermore, that is, since the structural element further comprises at least a first supplemental channel in - or essentially in - the longitudinal direction, which at least first supplemental channel forms a space configured for containment of PCM, there is additionally provided one or more longitudinally-stretching elongated voids and/or PCM channels in the structural element, intended and/or adapted for - at least partly - holding and/or comprising solid and/or liquid PCM capable of drastically reducing the temperature of potential cell ejecta. Thereby, the one or more supplemental channels - i.e. PCM channels - are integrated within the structural element, thus supporting saving volume within the battery housing, module and/or pack.

Moreover, that is, since the at least first supplemental channel is separated from the venting channel with at least a first shared wall configured to at least partly rupture when exposed to a temperature above a temperature threshold and/or a flow of matter at a velocity above a velocity threshold, there is provided rupturable barrier(s) - for instance with a thickness of 1 mm or less - between the venting channel and the one or more supplemental channels, which is adapted to - at least partly - rupture, collapse, break and/or melt upon being subjected to heat above a predeterminable threshold - such as above 400, 900 or 1 400 degrees Celsius - and/or subjected to, for instance bombarded with, matter such as cell ejecta at a speed above a predeterminable threshold, such as above 10, 55 or 100 m/s. Thereby - for instance as a consequence of a potential thermal runaway - upon rupture of the one or more shared walls between the venting channel and supplemental channel(s) which subsequently enables PCM to be released and/or flow into the venting channel, said PCM - with its heat absorbing characteristics - may support cooling of matter, such as drastically reducing the temperature of potential cell ejecta.

Accordingly, with the introduced concept with a structural element exhibiting an integrated venting channel as well as integrated one or more supplemental channels configured to release PCM upon shared walls being ruptured due to extensive heat and/or bombarding of matter such as cell ejecta, there is provided a volume-efficient solution which at the same time mitigates the risk of thermal runaway propagation such as spreading to other cells.

It may be noted that even without - and/or before - the shared wall(s) rupturing, PCM in the at least first supplemental channel may support reducing the temperature of cell ejecta, although not as efficiently as if in direct contact.

Optionally in some examples, including in at least one preferred example, the at least first supplemental channel may at least partly contain PCM. A technical benefit may include that the at least first PCM channel indeed - at least partly such as to at least 80% and/or along at least 80% of the channel's longitudinal extension - is filled with and/or comprises PCM, such as liquid and/or solid PCM, for instance non-flammable and/or dielectric PCM, such as hydrated salt, capable of drastically reducing temperatures of matter such as cell ejecta.

Further optionally in some examples, including in at least one preferred example, the structural element may further comprise - positioned along the structural element in the longitudinal direction - at least a first cut-out in the width direction into the venting channel, which at least first cut-out forms an inlet into the venting channel configured for supporting receiving cell ejecta from the at least first battery cell stack. A technical benefit may include that one or more through-openings of any feasible dimensions - such as of rectangular shape e.g. slits - reaching into the venting channel in - or essentially in - the width direction, may be distributed along the length of the structural element, adapted and/or intended for respectively functioning as an inlet for cell ejecta potentially erupted from cells of a respective battery cell stack.

Moreover optionally, in some examples including in at least one preferred example, a confining wall of the structural element defining the venting channel in the longitudinal direction opposite the at least first cut-out in the width direction, is non-perpendicular to the width direction by having an inclination from the height direction towards the at least first cut-out. A technical benefit may include that the area within the venting channel across from the at least first cut-out - i.e. the inlet(s) for receival of potential cell ejecta - then is designed and/or formed - for instance along the entirety or essentially the entirety of the structural element's length - to have an inclination towards the inlet(a), for instance tilt at a predeterminable angle - such as at least 5, 30 or 55 degrees towards the inlet(s) as seen from the height direction - in order to deviate from being perpendicular to the width direction. Thereby, there is enabled for potential cell ejecta entering the venting channel through the at least first cut-out, to hit the confining wall of the venting channel - which may be referred to as a back-wall - at an angle deviating from 90 degrees such as at an obtuse angle, which supports cell ejecta being efficiently guided into - and subsequently transported through - the venting channel.

Furthermore optionally, in some examples including in at least one preferred example, the confining wall may comprise at least one out of the at least first shared wall. A technical benefit may include that the so-called back-wall then is, constitutes, is comprised in and/or comprises the at least a first barrier on which other side there is configured for PCM to be contained. Thereby, upon potential cell ejecta entering the venting channel, the first wall said cell ejecta would then encounter would be the rupturable at least first shared wall, through which PCM then may enter the venting channel and drastically reduce the temperature of the cell ejecta.

Moreover optionally, in some examples including in at least one preferred example, the structural element may further comprise - positioned near and/or at an end portion of the structural element in the longitudinal direction - a supplemental cut-out extending in the width direction into the venting channel, which supplemental cut-out forms an outlet configured for supporting releasing cell ejecta. A technical benefit may include that a through-opening of any feasible dimensions - such as of rectangular shape - reaching into the venting channel in - or essentially in - the width direction, may be adapted and/or intended for allowing potential cell ejecta to exit the venting channel, such as to a cell ejecta trapping and/or outlet compartment of - and/or in connection with - the battery housing, module and/or pack, and/or alternatively to an outside thereof.

Further optionally, in some examples including in at least one preferred example, the structural element may further comprise - positioned at a top portion of the structural element in the height direction, along the longitudinal direction - at least a first opening and/or protrusion extending in the height direction, which at least first opening and/or protrusion forms one or more mounting points configured for supporting stacking in the height direction, such as with another structural element comprising at its bottom portion at least a first other opening and/or other protrusion coinciding with said at least first opening and/or protrusion. A technical benefit may include that one or more openings and/or protrusions of any feasible dimensions - such as of cylindrical shape - extending in - or essentially in - the height direction into and/or outwardly from the structural element from a top and/or upper surface thereof, may be distributed along the length of the structural element, adapted and/or intended for respectively functioning to lock, connect, couple, and/or mate for instance with a further structural element having - at its bottom portion in the height direction - coinciding openings and/or protrusions. Thereby, there is supported in a robust manner stacking in the height direction with a further structural element and subsequently supported robust stacking of two or more battery cell stacks at least partly on top of one another.

Moreover optionally, in some examples including in at least one preferred example, the structural element may further comprise - positioned at a surface of a top portion of the structural element in the height direction - at least a first groove and/or ridge extending along at least a portion of the surface, which at least first groove forms one or more indentations and/or the at least first ridge forms one or more protrusions configured for supporting stacking in the height direction, such as with another structural element comprising at its bottom portion at least a first ridge coinciding with said at least first groove and/or at least a first groove coinciding with said at least first ridge. A technical benefit may include that one or more grooves and/or ridges of any feasible number and/or dimensions - for instance a single track and/or one or more continuously and/or intermittently distributed tracks - may be provided on the surface of the structural element's top portion - such as extending in the longitudinal and/or width direction or a combination thereof - adapted and/or configured for functioning to lock, connect, couple, and/or mate for instance with a further structural element having - at its bottom portion in the height direction - coinciding ridges and/or grooves. Thereby, there is supported in a robust manner stacking in the height direction with a further structural element and subsequently supported robust stacking of two or more battery cell stacks at least partly on top of one another.

Furthermore optionally, in some examples including in at least one preferred example, the structural element may further comprise - positioned at an end portion of the structural element in the longitudinal direction - at least a first supplemental opening extending in the longitudinal direction, which at least first supplemental opening forms one or more mounting points configured for supporting mounting of the structural element in the longitudinal direction. A technical benefit may include that there may be provided one or more further openings, for instance through-holes, of any feasible dimensions - such as of cylindrical shape - extending in - or essentially in - the longitudinal direction into the structural element from a length-wise end portion of the structural element, adapted and/or intended for mounting and/or fastening of the structural element, such as to for instance a vehicle and/or a chassis thereof, and/or to one or more further structural elements.

Moreover optionally, in some examples including in at least one preferred example, the structural element may further comprise - positioned along the structural element in the longitudinal direction - at least a first through-hole in the height direction through one or more lips extending in the width direction of the structural element, which at least first through-hole forms one or more mounting points configured for supporting mounting of the structural element in the height direction. A technical benefit may include that there may be provided one or more further openings for instance screw-holes of any feasible dimensions such as of cylindrical shape, extending in - or essentially in - the height direction through one or more - for instance at a bottom section of the structural element positioned - lips and/or protrusions of the structural element extending outwardly in the width direction such as from a side of the structural element opposite a side intended to face one or more battery cell stacks, which further openings and/or screw-holes are adapted and/or intended for mounting and/or fastening of the structural element in the height direction, such as for instance to a vehicle and/or a chassis thereof.

Further optionally, in some examples including in at least one preferred example, the structural element may comprise aluminum. A technical benefit may include that the structural element then is made of a material suitable for a battery housing.

Moreover optionally, in some examples including in at least one preferred example, the structural element may comprise extruded aluminum. A technical benefit may include that the structural element then may be made of a material and in a manner suitable for a battery housing. With a structural element of extruded aluminum, dimensions of the structural element, the at least first shared wall, the venting channel, the at least first supplemental channel etc., may respectively be constant along the structural element's longitudinal extension. According to an alternative example, the structural element may comprise cast aluminum and/or aluminum undergone casting.

Furthermore optionally, in some examples including in at least one preferred example, the at least first supplemental channel may extend along at least 80% of the venting channel. A technical benefit may include that there is supported that the one or more supplemental channels configured to hold PCM, extend along the entire or close to the entire extent of the venting channel, thus supporting cooling of potential cell ejecta along most of the venting channel's length.

Moreover optionally, in some examples including in at least one preferred example, at least one of the two ends in the longitudinal direction of the venting channel and/or one or more of the at least first supplemental channel, is closed. A technical benefit may include that the venting channel and/or one or more PCM channels may be prevented from being open-ended in the lengthwise direction, for instance by being plugged. A closed and/or plugged supplemental channel(s) may for instance imply that liquid PCM may be used.

According to a second aspect of the disclosure, there is provided a battery housing assembly. The battery housing assembly comprises at least a first structural element in accordance with the first aspect of the disclosure, at least a first battery cell stack, and a trapping compartment for trapping of cell ejecta. The second aspect of the disclosure may seek to provide an improved and/or alternative approach of saving volume in a battery housing, pack and/or module while at the same time mitigating the risk of thermal runaway propagation. Advantages and technical benefits of the second aspect of the disclosure are analogous to the advantages and technical benefits of the first aspect of the disclosure.

Optionally, in some examples including in at least one preferred example, the above discussed at least first cut-out of the structural element, may be aligned in the width direction with cell ejecta outlets of cells of the at least first battery cell stack. A technical benefit may include that respective cut-out - which functions as an inlet for cell ejecta - is made to coincide in - or essentially in - the width direction with outlets of cells of a respective battery cell stack. Thereby, cell ejecta potentially erupting from one or more cells, may enter the venting channel in an efficient and/or convenient manner.

Further optionally, in some examples including in at least one preferred example, the above discussed supplemental cut-out of the structural element, may be in fluid connection - such as in fluid communication - with the trapping compartment. A technical benefit may include that the supplemental cut-out - which functions as an outlet for cell ejecta - is disposed and/or positioned such that potential cell ejecta exiting the venting channel may enter the cell ejecta trapping and/or outlet compartment of - and/or in connection with - the battery housing, module and/or pack.

According to a third aspect of the disclosure, there is provided a battery module and/or pack comprising a battery housing assembly in accordance with the first aspect of the disclosure. Advantages and technical benefits of the third aspect of the disclosure are analogous to the advantages and effects of the first and second aspects of the disclosure.

According to a fourth aspect of the disclosure, there is provided a vehicle comprising a battery housing assembly in accordance with the first aspect of the disclosure. Advantages and technical benefits of the fourth aspect of the disclosure are analogous to the advantages and effects of the first, second and third aspects of the disclosure.

According to a fifth aspect of the disclosure, there is provided an energy storage system comprising a battery housing assembly in accordance with the second aspect of the disclosure, and/or a battery module and/or pack in accordance with the third aspect of the disclosure. Advantages and technical benefits of the fifth aspect of the disclosure are analogous to the advantages and effects of the first, second, third and fourth aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** discloses an exemplary battery housing assembly in a perspective view according to an example.
**FIGS. 3a****-c** illustrate an exemplary structural element in perspective and side views according to an example.
**FIG. 4** is an exemplary structural element in a side view according to an example.
**FIG. 5** is an exemplary structural element in a side view according to an example.

The drawings are not necessarily drawn to scale. It shall also be noted that some details in the drawings may be exaggerated to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient details to enable those skilled in the art to practice the disclosure. An aim of the present disclosure is to provide an improved and/or alternative approach of saving volume in a battery housing, pack and/or module while at the same time mitigating the risk of thermal runaway propagation. For example, with the present disclosure, a transport channel for transporting potential cell ejecta - along with one or more supplemental channels configured to be filled with PCM - are comprised within a structural element for and/or of an ESS battery housing, thus enabling for saving space within the housing, module and/or pack, and potentially further cost, while at the same time supporting the ability of drastically reducing the temperature of potential cell ejecta.

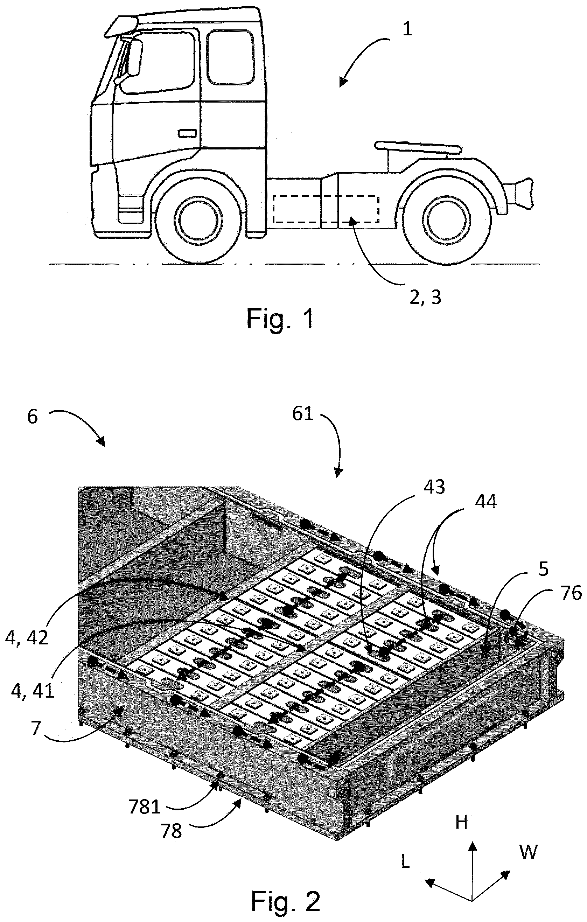

**FIG. 1** is an exemplary **vehicle 1** in a side view according to an example. The vehicle 1 in the shown example is a truck for towing one or more trailers (not shown). It shall, however, be understood that the vehicle 1 may be any other type of vehicle, such as another type of truck, a bus, a passenger car, and construction equipment, such as an excavator, marine vessel, a wheel loader, etc. The vehicle 1 may be driven by a user (not shown) and/or be at least partly automatically driven, i.e., it may be a vehicle comprising autonomous driving capabilities. The vehicle 1 may be a fully electric vehicle or a hybrid vehicle. As such, the vehicle 1 may comprise one or more electric motors/generators and/or an internal combustion engine (not shown) for driving the vehicle 1.

The vehicle 1 may comprise at least a first **battery pack** and/or **module 2,** which may be used for instance for powering the one or more electric motors/generators. The battery pack(s) and/or module(s) 2 may be part of an **energy storage system 3** - which likewise may be comprised in the vehicle 1 - further comprising a plurality of electrically connected battery cells. It may be noted that the energy storage system 3 and/or battery pack(s) and/or module(s) 2 as disclosed herein also may be used in stationary machinery and/or in a building.

The vehicle 1, the battery pack(s) and/or module(s) 2, and/or the energy storage system 3 may comprise a battery housing assembly, which will be described in further detail in the following.

**FIG. 2** discloses an exemplary **battery housing assembly 6** in a perspective view according to an example. The battery housing assembly 6 comprises at least a first battery **cell stack 4** - here a **first battery cell stack 41** and a **second battery cell stack 42.** The cell stacks 4 are here stacked next to each other, but according to alternative examples, cells stacks 4 may additionally or alternatively be stacked - at least partly - on top of one another. The one or more cell stacks 4 may respectively comprise any feasible number of battery cells, such as for instance at least 4, 8 or 12 battery cells, as known in the art. Said battery cells may further be of any feasible type, such as electrochemical cells - for instance lithium-ion battery cells - and moreover for instance - as shown in the illustrated example - prismatic battery cells, although according to alternative examples, other battery cell types such as for instance cylindrical cells and/or pouch cells may be feasible. Respective battery cell has, as commonly known in the art, a **cell ejecta outlet 43,** to enable cell ejecta - such as for instance gas and/or particles - to erupt in the rare occasion of a potential thermal runaway. Cell ejecta outlets 43 of cells of the same battery cell stack 4, may be aligned or essentially aligned, such that potential erupted cell ejecta from one or more cell ejecta outlets 43 may follow a common **cell ejecta transport direction 44.**

The battery housing assembly 6 further comprises a **trapping compartment 5** for trapping of cell ejecta. The trapping compartment 5 - which may function to collect cell ejecta as known in the art - may be of any feasible dimensions, and further positioned at any feasible location, such as at least partially inside - and/or outside - of a **battery housing 61,** module and/or pack 2.

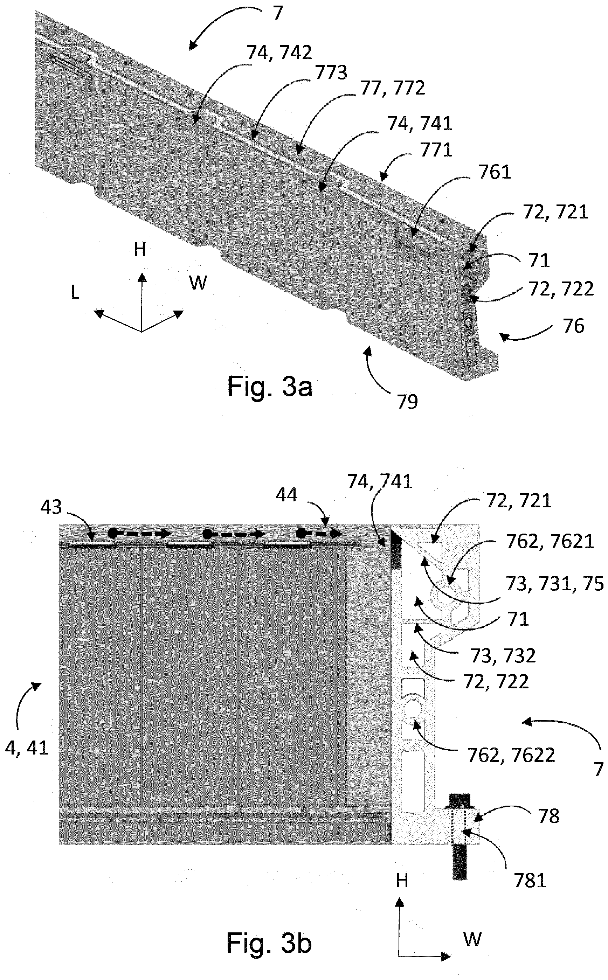

Furthermore, the battery housing assembly 6 comprises at least a first **structural element 7.** The structural element 7 will be described in further detail in the following, with additional support from FIGS 3a-c.

**FIGS. 3a****-c** illustrate the exemplary structural element 7 in perspective and side views according to an example. The structural element 7 is for the battery housing 61 - which is configured to house the at least first battery cell stack 4 - such as intended to constitute and/or be comprised in a section of the battery housing 61 - and/or potentially the battery pack and/or module 2 - for instance a load-bearing section thereof. The structural element 4 has a longitudinal extension along a **longitudinal direction L,** a width extension along a **width direction W and** a height extension along a **height direction H.** The directions - and/or axes - may be considered perpendicular to each other and may also be referred to as a Cartesian coordinate system. Respective extension along the L, W, H directions may be of any feasible dimensions, such as a longitudinal extension for instance in the range of 0.3 to 3 meters, a width extension for instance in the range of 0.03 to 0.30 meters, and/or a height extension for instance in the range of 0.05 to 0.5 meters. Furthermore, respective length, width and/or height of the structural element 7 may vary along its extensions.

The structural element 7 may be of any feasible material suitable for a battery housing. Optionally, however, the structural element 7 may comprise aluminum.

Furthermore, the structural element 7 may optionally comprise extruded aluminum. Alternatively, according to another example, the structural element 7 may comprise cast aluminum and/or aluminum undergone casting.

The structural element 7 comprises a **venting channel 71** with an extension in - or essentially in - the longitudinal direction L, which venting channel 71 forms a space configured for transport of cell ejecta from the at least first battery cell stacks 4. The venting channel 71 may be of any feasible dimensions, such as extending lengthwise along a portion of or the entirety - or close to the entirety - of the structural element 7, and further such as having a cross section thereof - as may be gleaned from exemplifying FIG 3b which depicts the example structural element 7 in a side view - of irregular form. Said form may for instance depend on the implementation at hand and/or tooling restrictions.

The structural element 7 further comprises at least a first **supplemental channel 72** in - or essentially in - the longitudinal direction L, which at least first supplemental channel 72 forms a space configured for containment of phase change material, PCM. In the shown example, a **first supplemental channel 721** and a **second supplemental channel 722** are provided. The one or more supplemental channels 72 - which may be referred to as PCM channels - may be of any feasible dimensions, such as extending length-wise along a portion of or the entirety - or close to the entirety - of the structural element 7 and/or the venting channel 71, and further such as having a cross section thereof - as may be gleaned from exemplifying FIG 3b - of for instance triangular or essentially triangular and/or irregular form. According to another example, said cross section may for instance have a rectangular form. Said form may for instance depend on the implementation at hand and/or tooling restrictions. Optionally, the at least first supplemental channel 72 may extend along at least 80% of the venting channel 71.

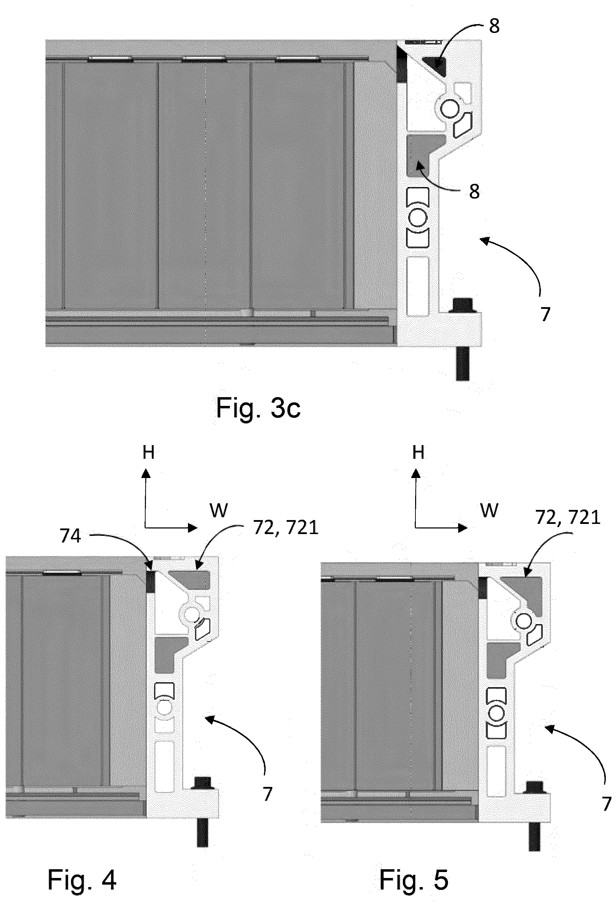

As may be gleaned from FIG. 3c - which depicts the example structural element 7 in a side view - the at least first supplemental channel 72 may thus at least partly contain **PCM 8.** The PCM 8 may refer to any feasible phase change material - for instance known in the art - and further be represented by either or a combination of liquid and sold PCM, for instance non-flammable and/or dielectric PCM - such as hydrated salt - capable of drastically reducing temperatures of matter such as cell ejecta.

The venting channel 71 and/or one or more of the at least first supplemental channel 72 may for instance stretch through the entire length of the structural element 7, thus being through-openings of sort. This may be the case should the structural element 7 be an extruded structural element 7 and/or have been shaped and/or manufactured through extrusion. Optionally, however, at least one of the two ends in the longitudinal direction L of the venting channel 71 and/or one or more of the at least first supplemental channel 72, may be closed. Closed ends - which for instance may be suitable in combination with the use of liquid PCM at least in view of the one or more supplemental channels 72 - may for instance be accomplished by the channel(s) 71, 72 being closed already when being manufactured which may be relevant in the case of a structural element 71 undergone casting, and/or by plugging of the end(s) such as by inserting plugs which may be relevant in case of an extruded structural element 71.

The at least first supplemental channel 72 is separated from the venting channel 71 with at least a first **shared wall 73** configured to at least partly rupture when exposed to a temperature above a temperature threshold and/or a flow of matter at a velocity above a velocity threshold. In the shown example, there is a **first shared wall 731** between the venting channel 71 and the first supplemental channel 721, and a **second shared wall 732** between the venting channel 71 and the second supplemental channel 722. The at least first shared wall 73 may be of any feasible thickness, for instance 1 mm or less - at least where intended to be rupturable - and may according to an example thus potentially vary along the shared wall(s) 73. The temperature threshold - above which the shared wall(s) 73 is configured to rupture - may correspondingly be of any feasible value, such as for instance above 400, 900 or 1 400 degrees Celsius, and further adapted to match expected temperature levels potentially imposed by potential cell ejecta on the shared wall(s) 73. Similarly, the velocity threshold - above which the at least first shared wall 73 also is configured to rupture - may be of any feasible value, such as for instance above 10, 55 or 100 m/s, and further adapted to match velocity levels at which - and/or forces at which - potential cell ejecta is expected to bombard the shared wall(s) 73.

Furthermore, the structural element 7 may further comprise - positioned along the structural element 7 in the longitudinal direction L - at least a first **cut-out 74** in the width direction W into the venting channel 71, which at least first cut-out 74 forms an inlet into the venting channel 71 configured for supporting receiving cell ejecta from the at least first battery cell stack 4. The one or more cut-outs 74 - which may be of any feasible and/or suitable number for instance in view of the implementation at hand - may be of any feasible dimensions, such as adapted to be suitable and/or convenient in terms of functioning as inlet(s) for potential cell ejecta and/or in terms of tooling restrictions. In the shown example, a **first cut-out 741** and a **second cut-out 742** are exemplified, respectively having the form of a slit, for instance with a width in the range of 10 to 100 mm. The at least first cut-out 74 may be aligned - or essentially aligned - in the width direction W with the cell ejecta outlets 43 of cells of the at least first battery cell stack 4. As illustrated in FIG. 2, cells of respective battery cell stack 4 may for instance be stacked in the width direction W, with cell ejecta outlets 43 - and subsequently cell ejecta transport directions 44 - coinciding in the width direction W with corresponding structural element inlet 74.

Furthermore, optionally, a **confining wall 75** of the structural element 7 defining the venting channel 71 in the longitudinal direction L opposite the at least first cut-out 74 in the width direction W, may be non-perpendicular to the width direction W by having an inclination from the height direction H towards the at least first cut-out 74. Said inclination towards the inlet(s) 74 may be designed and/or formed in any feasible manner supporting the confining wall 75 being non-perpendicular to the width direction - and subsequently avoidance of potential cell ejecta hitting the confining wall 75 perpendicularly - for instance by the confining wall 75 leaning at an angle of at least 5, 30 or 55 degrees towards the inlet(s) 74 as seen from the height direction H. In the example illustrated in FIG. 3b, the confining wall 75 has an inclination of approximately 45 degrees. According to an alternative example, the confining wall 75 may be represented by and/or comprise an at least partly curved wall.

Moreover, the confining wall 75 may comprise - and/or constitute and/or be comprised in - at least one out of the at least first shared wall 73. In the shown example of FIG. 3b, it is illustrated in an exemplifying manner how the confining wall 75 may comprise the first shared wall 731.

As shown in example of FIG. 2, the structural element 7 may, optionally, further comprise - positioned near and/or at an **end portion 76** of the structural element 7 in the longitudinal direction L - a **supplemental cut-out 761** extending in the width direction W into the venting channel 71, which supplemental cut-out 761 forms an outlet configured for supporting releasing cell ejecta. The supplemental cut-out 761 may be of any feasible dimensions, such as adapted to be suitable and/or convenient in terms of functioning as an outlet for potential cell ejecta and/or in terms of tooling restrictions. In the shown example, the outlet 761 has the exemplifying form of a rectangle, for instance in the range of 10-100 * 5-50 mm, although other dimensions, forms and/or shapes likewise may be feasible. The supplemental cut-out 761 of the structural element 7 may be in fluid connection and/or communication with the trapping compartment 5, as may be gleaned from exemplifying FIG. 2. According to an alternative example, the supplemental cut-out 761 may comprise more than a single cut-out.

Moreover, the structural element 7 may comprise - positioned at a **top portion 77** of the structural element 7 in the height direction H - along the longitudinal direction L, at least a first **opening and/or protrusion 771** extending in the height direction H, the at least first opening and/or protrusion 771 forming one or more mounting points configured for supporting stacking in the height direction H, such as with another structural element comprising at its bottom portion at least a first other opening and/or other protrusion coinciding with the at least first opening and/or protrusion 771. The one or more openings and/or protrusions 771 may be dimensioned, positioned and/or distributed along the structural element top portion 77 in any feasible manner supporting for instance a further structural element to - for instance by means of protrusions and/or separate pins - connect, lock and/or engage with the structural element 7 at said opening(s) and/or protrusion(s) 771. In the example depicted in FIGS. 2 and 3a, a number of distributed openings 771 respectively supports robust stacking of at least one other structural element at least partially on top of the shown structural element 7, such as by a respective pin (not shown) associated with a bottom of the other structural element mating with respective opening 771.

Furthermore, the structural element 7 may comprise - positioned at a **surface 772** of a top portion 77 of the structural element 7 in the height direction H - at least a first **groove and/or ridge 773** extending along at least a portion of the surface 772, which at least first groove 773 forms one or more indentations and/or the at least first ridge 773 forms one or more protrusions configured for supporting stacking in the height direction H, such as with another structural element comprising at its bottom portion at least a first ridge coinciding with the at least first groove 773 and/or at least a first groove coinciding with the at least first ridge 773. The one or more grooves and/or ridges 773 may be dimensioned, positioned and/or distributed at the surface 772 along the structural element top portion 77 in any feasible manner supporting for instance a further structural element - with corresponding ridge(s) and/or groove(s) at its bottom portion - to connect, lock and/or engage with the structural element 7 at said groove(s) and/or ridge(s) 773. In the example depicted in FIGS. 2 and 3a, a continuous groove 773 supports robust stacking of at least one other structural element on top of the shown structural element 7, such as by a corresponding ridge (not shown) at the bottom of the other structural element mating with the groove 773.

Moreover, the structural element 7 may comprise - positioned at an end portion 76 of the structural element 7 in the longitudinal direction L - at least a first **supplemental opening 762** extending in the longitudinal direction L, which at least first supplemental opening 762 forms one or more mounting points configured for supporting mounting of the structural element 7 in the longitudinal direction. In the shown example, a **first supplemental opening 7621** and a **second supplemental opening 7622** are provided. The one or more supplemental openings 762 may be dimensioned and/or distributed at one or both lengthwise end portions 762 of the structural element 7 in any feasible manner supporting lengthwise connection, fastening and/or mounting at the supplemental opening(s) 762, such as with a vehicle 1 and/or for instance a chassis thereof, and/or such as with another structural element.

Furthermore, as shown in the example of FIG. 2, the structural element 7 may comprise - positioned along the structural element 7 in the longitudinal direction L - at least a first **through-hole 781** in the height direction H through one or more **lips 78** extending in the width direction W of the structural element 7, which at least first through-hole 781 forms one or more mounting points configured for supporting mounting of the structural element 7 in the height direction H. The lip(s) 78 may be of any feasible dimensions, such as for instance having an extension in the width direction W and/or height direction H in the range of 10 to 100 mm and/or and further located at any feasible position in the height direction H such as at a **bottom portion 79** of the structural element 7. In the shown example, the lip(s) 78 is represented by a single lengthwise-stretching lip at the bottom-portion 79 of the structural element 7, with said lip 78 extending outwardly in the width direction W away from the at least first battery cell stack 4. The one or more through-holes 781 - which may be of any feasible and/or suitable number for instance in view of the implementation at hand and further for instance represented by screw-holes - may likewise be of any feasible dimensions, such as adapted to be suitable and/or convenient in terms of supporting connection, fastening and/or mounting in the height direction of the structural element 7 at the through-holes 781, such as with a vehicle 1 and/or for instance a chassis thereof.

**FIG. 4** is an exemplary structural element 7 in a side view according to an example. The structural element 7 corresponds to the structural element 7 discussed above, with the exception of exemplifying an alternative design of the at least first cut-out 74, and in addition thereto - unrelated to said alternative cut-out design - an alternative design of the first supplemental channel 721.

**FIG. 5** is an exemplary structural element in a side view according to an example. The structural element 7 corresponds to the structural element 7 discussed above, with the exception of exemplifying yet another alternative design of the first supplemental channel 721.

In the following, possible features and feature combinations of the present disclosure are presented as a list of Examples.

Example 1: A **structural element** (7) for an energy storage system battery housing (6) configured to house at least a first battery cell stack (4), the structural element (7) having a longitudinal extension along a longitudinal direction (L), a width extension along a width direction (W) and a height extension along a height direction (H), the structural element (7) comprising:
- a venting channel (71) with an extension in the longitudinal direction (L), said venting channel (71) forming a space configured for transport of cell ejecta from the at least first battery cell stack (4); and
- at least a first supplemental channel (72) in the longitudinal direction (L), said at least first supplemental channel (72) forming a space configured for containment of phase change material, PCM,
wherein the at least first supplemental channel (72) is separated from the venting channel (71) with at least a first shared wall (73) configured to at least partly rupture when exposed to a temperature above a temperature threshold and/or a flow of matter at a velocity above a velocity threshold.

Example 2: The structural element (7) according to Example 1, wherein the at least first supplemental channel (72) at least partly contains PCM.

Example 3: The structural element (7) according to Example 1 or 2, wherein the structural element (7) further comprises:
- positioned along the structural element (7) in the longitudinal direction (L), at least a first cut-out (74) in the width direction (W) into the venting channel (71), said at least first cut-out (74) forming an inlet into said venting channel (71) configured for supporting receiving cell ejecta from the at least first battery cell stack (4).

Example 4: The structural element (7) according to Example 3, wherein a confining wall (75) of the structural element (7) defining the venting channel (4) in the longitudinal direction (L) opposite the at least first cut-out (74) in the width direction (W), is non-perpendicular to the width direction (W) by having an inclination from the height direction (H) towards the at least first cut-out (74) .

Example 5: The structural element (7) according to Example 4, wherein said confining wall (75) comprises at least one out of the at least first shared wall (73).

Example 6: The structural element (7) according to any one of Examples 1-5, wherein the structural element (7) further comprises:
- positioned near and/or at an end portion (76) of said structural element (7) in the longitudinal direction (L), a supplemental cut-out (761) extending in the width direction (W) into the venting channel (71), said supplemental cut-out (761) forming an outlet configured for supporting releasing cell ejecta.

Example 7: The structural element (7) according to any one of Examples 1-6, wherein the structural element (7) further comprises:
- positioned at a top portion (77) of the structural element (7) in the height direction (H), along the longitudinal direction (L), at least a first opening and/or protrusion (771) extending in the height direction (H), the at least first opening and/or protrusion (771) forming one or more mounting points configured for supporting stacking in the height direction (H), such as with another structural element comprising at its bottom portion at least a first other opening and/or other protrusion coinciding with said at least first opening and/or protrusion (771).

Example 8: The structural element (7) according to any one of Examples 1-7, wherein the structural element (7) further comprises:
- positioned at a surface (772) of a top portion (77) of the structural element (7) in the height direction (H), at least a first groove and/or ridge ( 773) extending along at least a portion of the surface (772), the at least first groove (773) forming one or more indentations and/or the at least first ridge (773) forming one or more protrusions configured for supporting stacking in the height direction (H), such as with another structural element comprising at its bottom portion at least a first ridge coinciding with said at least first groove (773) and/or at least a first groove coinciding with said at least first ridge (773).

Example 9: The structural element (7) according to any one of Examples 1-8, wherein the structural element (7) further comprises:
- positioned at an end portion (76) of the structural element (7) in the longitudinal direction (L), at least a first supplemental opening (762) extending in the longitudinal direction (L), the at least first supplemental opening (762) forming one or more mounting points configured for supporting mounting of the structural element (7) in the longitudinal direction.

Example 10: The structural element (7) according to any one of Examples 1-9, wherein the structural element (7) further comprises:
- positioned along the structural element (7) in the longitudinal direction (L), at least a first through-hole (781) in the height direction (H) through one or more lips (78) extending in the width direction (W) of the structural element (7), said at least first through-hole (781) forming one or more mounting points configured for supporting mounting of the structural element (7) in the height direction (H).

Example 11: A **battery housing assembly** (6) comprising:
- at least a first battery cell stack (4);
- a trapping compartment (5) for trapping of cell ejecta; and
- at least a first structural element (7) according to any one of Examples 1-10.

Example 12: The battery housing assembly (6) according to Example 11 in combination with Example 3, wherein the at least first cut-out (74) of the structural element, is aligned in the width direction (W) with cell ejecta outlets (43) of cells of the at least first battery cell stack (4).

Example 13: The battery housing assembly (6) according to Example 11 or 12 in combination with Example 6, wherein the supplemental cut-out (761) of the structural element (7), is in fluid connection with the trapping compartment (5).

Example 14: A **battery module** and/or **pack** (2) comprising a battery housing assembly (6) according to any one of Examples 11-13.

Example 15: A **vehicle** (1) comprising a battery housing assembly (6) according to any one of Examples 11-13, and/or a battery module and/or pack (2) according to Example 14.

Example 16: The structural element (7) according to any one of Examples 1-10, wherein the structural element (7) comprises aluminum.

Example 17: The structural element (7) according to Example 16, wherein the structural element (7) comprises extruded aluminum.

Example 18: The structural element (7) according to any one of Examples 1-10 or 16-17, wherein the at least first supplemental channel (72) extends along at least 80% of the venting channel (71).

Example 17: The structural element (7) according to any one of Examples 1-10 or 16-18, wherein at least one of the two ends (76) in the longitudinal direction (L) of the venting channel (71) and/or one or more of the at least first supplemental channel (72), is closed.

Example 20: An **energy storage system** (3) comprising a battery housing assembly (6) according to any one of Examples 11-13, and/or a battery module and/or pack (2) according to Example 14.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A **structural element** (7) for an energy storage system battery housing (6) configured to house at least a first battery cell stack (4), the structural element (7) having a longitudinal extension along a longitudinal direction (L), a width extension along a width direction (W) and a height extension along a height direction (H), the structural element (7) comprising:
- a venting channel (71) with an extension in the longitudinal direction (L), said venting channel (71) forming a space configured for transport of cell ejecta from the at least first battery cell stack (4); and
- at least a first supplemental channel (72) in the longitudinal direction (L), said at least first supplemental channel (72) forming a space configured for containment of phase change material, PCM,
wherein the at least first supplemental channel (72) is separated from the venting channel (71) with at least a first shared wall (73) configured to at least partly rupture when exposed to a temperature above a temperature threshold and/or a flow of matter at a velocity above a velocity threshold.

2. The structural element (7) according to claim 1, wherein the at least first supplemental channel (72) at least partly contains PCM.

3. The structural element (7) according to claim 1 or 2, wherein the structural element (7) further comprises:
- positioned along the structural element (7) in the longitudinal direction (L), at least a first cut-out (74) in the width direction (W) into the venting channel (71), said at least first cut-out (74) forming an inlet into said venting channel (71) configured for supporting receiving cell ejecta from the at least first battery cell stack (4).

4. The structural element (7) according to claim 3, wherein a confining wall (75) of the structural element (7) defining the venting channel (72) in the longitudinal direction (L) opposite the at least first cut-out (74) in the width direction (W), is non-perpendicular to the width direction (W) by having an inclination from the height direction (H) towards the at least first cut-out (74) .

5. The structural element (7) according to claim 4, wherein said confining wall (75) comprises at least one out of the at least first shared wall (73).

6. The structural element (7) according to any one of claims 1-5, wherein the structural element (7) further comprises:
- positioned near and/or at an end portion (76) of said structural element (7) in the longitudinal direction (L), a supplemental cut-out (761) extending in the width direction (W) into the venting channel (71), said supplemental cut-out (761) forming an outlet configured for supporting releasing cell ejecta.

7. The structural element (7) according to any one of claims 1-6, wherein the structural element (7) further comprises:
- positioned at a top portion (77) of the structural element (7) in the height direction (H), along the longitudinal direction (L), at least a first opening and/or protrusion (771) extending in the height direction (H), the at least first opening and/or protrusion (771) forming one or more mounting points configured for supporting stacking in the height direction (H), such as with another structural element comprising at its bottom portion at least a first other opening and/or other protrusion coinciding with said at least first opening and/or protrusion (771).

8. The structural element (7) according to any one of claims 1-7, wherein the structural element (7) further comprises:
- positioned at a surface (772) of a top portion (77) of the structural element (7) in the height direction (H), at least a first groove and/or ridge ( 773) extending along at least a portion of the surface (772), the at least first groove (773) forming one or more indentations and/or the at least first ridge (773) forming one or more protrusions configured for supporting stacking in the height direction (H), such as with another structural element comprising at its bottom portion at least a first ridge coinciding with said at least first groove (773) and/or at least a first groove coinciding with said at least first ridge (773).

9. The structural element (7) according to any one of claims 1-8, wherein the structural element (7) further comprises:
- positioned at an end portion (76) of the structural element (7) in the longitudinal direction (L), at least a first supplemental opening (762) extending in the longitudinal direction (L), the at least first supplemental opening (762) forming one or more mounting points configured for supporting mounting of the structural element (7) in the longitudinal direction.

10. The structural element (7) according to any one of claims 1-9, wherein the structural element (7) further comprises:
- positioned along the structural element (7) in the longitudinal direction (L), at least a first through-hole (781) in the height direction (H) through one or more lips (78) extending in the width direction (W) of the structural element (7), said at least first through-hole (781) forming one or more mounting points configured for supporting mounting of the structural element (7) in the height direction (H).

11. A **battery housing assembly** (6) comprising:
- at least a first battery cell stack (4);
- a trapping compartment (5) for trapping of cell ejecta; and
- at least a first structural element (7) according to any one of claims 1-10.

12. The battery housing assembly (6) according to claim 11 in combination with claim 3, wherein the at least first cut-out (74) of the structural element, is aligned in the width direction (W) with cell ejecta outlets (43) of cells of the at least first battery cell stack (4).

13. The battery housing assembly (6) according to claim 11 or 12 in combination with claim 6, wherein the supplemental cut-out (761) of the structural element (7), is in fluid connection with the trapping compartment (5).

14. A **battery module** and/or **pack** (2) comprising a battery housing assembly (6) according to any one of claims 11-13.

15. A **vehicle** (1) comprising a battery housing assembly (6) according to any one of claims 11-13, and/or a battery module and/or pack (2) according to claim 14.
